# EUROPEAN PATENT APPLICATION

(11) **EP 4 599 977 A1**
(43) Date of publication of application: **13.08.2025**
(21) Application number: 25152938.4
(22) Date of filing: 20.01.2025
(51) Int. Cl.: B23P 6/00, B23K 26/342, B23K 35/02, F01D 5/00

(54) **ENGINEERED MICROSTRUCTURE FOR ENHANCED PERFORMANCE DURING DIRECTED ENERGY DEPOSITION REPAIR PROCESS**

(30) Priority: 26.01.2024 US 202418424278
(71) Applicant: RTX Corporation, Farmington, CT 06032 (US)
(72) Inventor: SAWYERS-ABBOTT, Nigel, Farmington, 06032 (US); BREITZMANN, Peter, Farmington, 06032 (US)
(74) Representative: Dehns

(57) **Abstract**

An aerospace part (10), which is made from a base material, is inspected to identify a worn or defective repair region (20) that requires repair. A repair procedure is performed on the repair region (20) using a directed energy deposition (DED) energy/powder head (18). The repair procedure includes depositing, using the DED energy/powder head (18), a first layer of DED powder material in the repair region (20); melting and consolidating, using energy from the DED energy/powder head (18), the first layer of DED powder material to form a first repair layer (14) having a first pre-determined microstructure; and repeating the depositing and melting and consolidating steps to create a desired plurality of repair layers (14). Each of the plurality of repair layers (14) has a pre-determined microstructure. The microstructure of each of the plurality of repair layers (14) is imparted using selected levels of DED powder material feed to the repair region (20), intensity of energy directed from the DED energy/powder head (18) to the repair region (20), rate at which the DED energy/powder head (18) traverses the repair region (20), and auxiliary heating and/or cooling provided to the repair region (20). The aerospace part (10) is returned to service after completion of the desired repair.

## Description

The present disclosure relates generally to repair of components and, more particularly, to an approach for removing a feature to enable access to a repair site.

It is often desirable to repair components used in a variety of applications, include aircraft propulsion applications, after they have suffered operations-related wear or damage due to use in the environments for which they were intended. While a variety of repair techniques are available, not all such components can be repaired using currently known techniques.

### SUMMARY

One aspect of this disclosure is directed to a method of repairing an aerospace part. The aerospace part, which is made from a base material, is inspected to identify a worn or defective repair region that requires repair. A repair procedure is performed on the repair region using a directed energy deposition (DED) energy/powder head. The repair procedure includes depositing, using the DED energy/powder head, a first layer of DED powder material in the repair region; melting and consolidating, using energy from the DED energy/powder head, the first layer of DED powder material to form a first repair layer having a first pre-determined microstructure; and repeating the depositing and melting and consolidating steps to create a desired plurality of repair layers. Each of the plurality of repair layers has a pre-determined microstructure. The microstructure of each of the plurality of repair layers is imparted using selected levels of DED powder material feed to the repair region, intensity of energy directed from the DED energy/powder head to the repair region, rate at which the DED energy/powder head traverses the repair region, and auxiliary heating and/or cooling provided to the repair region. The aerospace part is returned to service after completion of the desired repair.

Another aspect of this disclosure is directed to a repaired aerospace part has a substrate made from a base material and a plurality of repair layers formed on the substrate using directed energy deposition (DED) techniques. Each of the plurality of repair layers has a pre-determined microstructure.

### BRIEF DESCRIPTION OF THE DRAWINGS

Fig. 1 is a first schematic representation of an aerospace part undergoing a directed energy deposition (DED) repair process.
Fig. 2 is a flowchart of the repair process of the present disclosure.

### DETAILED DESCRIPTION

While a wide variant of repair techniques are available for aerospace components that have suffered operations-related wear or damage due to use in the environments for which they were intended, not all components can be repaired using currently known techniques. For example, repair of aerospace components, such as gas turbine engine components, using directed energy deposition (DED) techniques must account for structural requirements throughout the component. Carefully selecting the microstructure of certain regions of a repaired feature can enable repairs that cannot be accomplished by other means and/or can extend the life of the repaired component after it is returned to service. Controlling the microstructure during a repair using DED techniques can take advantage of the layer-by-layer deposition inherent in the DED process to select a desired microstructure for each layer or specific area of each layer as it is deposited.

A pre-selected microstructure for each layer can be obtained by controlling the main parameters of the DED process, including DED powder feed rate to the repair region, the intensity of energy directed from the DED energy/powder heat to the repair region, the rate at which the DED energy/powder head traverses the repair region, and any auxiliary heating and/or cooling provided to the repair region. A person of ordinary skill will be able to establish the desired values for each of these main parameters as part of a repair development process for repairing a specific type of wear or damage to specific aerospace part. Among the considerations when establishing desired values for each of these main repairs is the specific (i.e., pre-determined) microstructure desired for each layer to be deposited and consolidated during the DED repair process. The pre-determined microstructure must account for the characteristics (e.g., composition, microstructure, etc.) of the base material from which the aerospace part is made, the characteristics of the DED powder material used for the repair (e.g., composition, microstructure after consolidation, etc.), the desired service life of the repaired aerospace part, and the operational conditions that the repaired aerospace part will experience when returned to service.

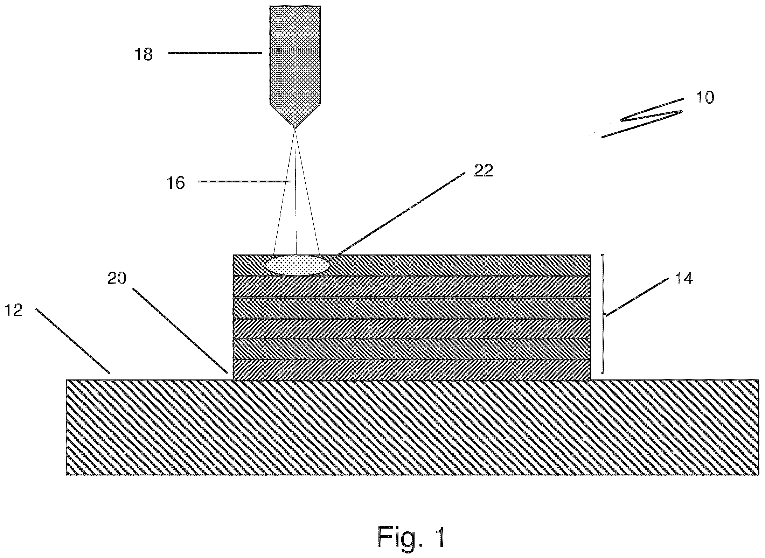

Fig. 1 is a schematic of an aerospace part **10** that requires repair due to operational wear or damage. In this example, aerospace part **10** is a candidate for repair using DED techniques (e.g., using DED energy/powder head **18**). Examples of repairs that can use DED techniques include (i) filling cracks in a repair region **20** of a substrate **12** using a DED powder material distributed by the DED energy/powder head **18** and consolidating the DED powder material using laser energy from the DED energy/powder head **18** and (ii) reestablishing a worn surface contour in the repair region **20** of a substrate **12** using a DED powder material distributed by the DED energy/powder head **18** and consolidating the DED powder material using laser energy from the DED energy/powder head **18.** The DED powder material is deposited from the DED energy/powder head **18** onto the substrate **12** as a plurality of layers **14,** initially as a layer of unconsolidated DED powder material and then as a repair layer after the DED powder material is consolidated using energy from the DED energy/powder head **18.** Although not expressly denominated as such in this disclosure, the plurality of layers **14** can be described as first layer (e.g., initially a first powder layer and then a first repair layer after consolidation), a second layer (e.g., initially a second powder layer and then a second repair layer after consolidation), a third layer (e.g., initially a third powder layer and then a third repair layer after consolidation), and so on. As discussed above, the residual stress level of each repair layer **14** can be pre-determined to provide a controlled microstructure for the repaired aerospace part **10.** Energy for performing melting and consolidating the DED powder material in each layer is provided by a laser (or electron beam gun) in the energy/powder head **18.** A person of ordinary skill will know how to control the DED energy/powder head **18** to raster or scan over the DED material powder to form a melt pool **22** to accomplish the desired repair with each of the plurality of layers **14** having a pre-determined microstructure.

The composition and amount of DED material powder and amount of energy produced by the DED energy/powder head **18** to raise the DED material powder to a temperature sufficient to form the melt pool **22** in the repair region **20** should be selected during the repair development process for a specific aerospace part **10.** For example, the DED powder material may have the same composition as the base material or a different composition than the base material. In addition, the repair development process can identify whether auxiliary heating or cooling of the repair region **20** is required to achieve the pre-selected microstructure. Once the desired repair to the on aerospace part **10** is accomplished, the aerospace part **10** can be returned to service.

A person of ordinary skill will recognize that the DED energy/powder head **18** can be any combination of DED energy and powder source known in the industry. For example, the DED energy/powder head 18 can be a unitary component as shown schematically in Fig. 1 or can be separate components that provide, respectively, energy for the DED repair process and DED powder material for the DED repair process. As known, the energy source can be a laser, electron beam gun, other energy source as deemed appropriate for a particular repair.

A person of ordinary skill will recognize that the materials used for the repair to the aerospace part **10** any of the materials typically used for the applications for which the aerospace part **10** is intended. For example, if the aerospace part **10** is used in a gas turbine application, the base material used to make the aerospace part **10** can be a titanium material for cold section (e.g., compressor) applications (see Table 1 for nonlimiting examples), a superalloy material for hot section (e.g., combustor and turbine) and disk applications (See Table 2 for nonlimiting examples), or specialty steels for other applications (e.g., shafts) (See Table 3 for nonlimiting examples). In most applications, the replacement intervening feature **12** will be made from the same base material as the aerospace part **10,** most likely in a powder form that is useable with an AM technique used to make the replacement intervening feature **12.** A person of ordinary skill will recognize that other materials can be used as the base material for the parts and method of this disclosure.

**Table 1: Selected Titanium Alloys**

| **Grade designation** | **Nominal chemical composition** |
|---|---|
| Ti64 | Ti-6Al-4V |
| Ti811 | Ti-8Al-1Mo-1V |
| Ti1100 | Ti-6Al-2.8Sn-4Zr-0.4Mo-0.4Si |
| Ti6242 | Ti-6Al-2Sn-4Zr-2Mo |
| Ti6242S | Ti-6Al-2Sn-4Zr-2Mo-0.2Si |

**Table 2: Selected Superalloys**

| **Grade designation** | **Nominal chemical composition** |
|---|---|
| Hastelloy X | Ni22Cr1.5Col.9Fe0.7W9Mo0.07C0.005B |
| IN 100 | 60Ni10Cr15Co3Mo4.7Ti5.5A10.15C 0.015B0.06Zr1.0V |
| IN 625 | 58.8Ni21.5Cr9Mo5Fe3.65Ni0.5A10.5Ti0.05C0.5Mn0.5Si0.015S0.015P |
| IN 713 | 74.2Ni12.5Cr4.2Mo2Nb0.8Ti6.1A10.1Zr0.12C0.01B |
| IN 718 | 53Ni19Cr18.5Fe3Mo0.9Ti0.5A15.1Cb 0.03C |
| IN 738 | 61.5Ni16Cr8.5Co1.75Mo2.6W1.75Ta0.9Nb3.4Ti3.4A10.04Zr0.11C0.01B |
| IN 792 | 60.8Ni12.7Cr9Co2Mo3.9W3.9Ta4.2T13.2Al0.1Zr0.21C0.02B |
| Rene 41 | 56Ni19Cr10.5Co9.5Mo3.2Ti1.7A10.01Zr0.08C0.005B |
| Rene 77 | 53.5Ni15Cr18.5Co5.2Mo3.5Ti4.25A10.08C0.015B |
| Rene 80 | 60.3Ni14Cr9.5Co4Mo4W5Ti3al0.03Zr0.17C0.015B |
| Rene 80+Hf | 59.8Ni14Cr9.5Co4Mo4W0.8Hf4.7Ti3A10.01Zr0.15C0.015B |
| Rene88 DT | 56.4Ni16cr13Co4Mo4W0.7Nb3.7Ti2.1A10.03C0.015B0.03Zr |
| Rene 95 | 61Ni14Cr8Co3.5Mo3.5W3.5Nb2.5Ti3.5Al0.16C0.01B0.05Zr |
| Rene 100 | 62.6Ni9.5Cr15Co3Mo4.2Ti5.5A10.06Zr0.15C0.015B |
| MERL-76 | 54.4Ni12.4Cr18.6co3.3Mo1.4Nb4.3Ti5.1A10.02C0.03B0.35Hf0.06Zr |
| Udimet 720 | 55Ni18Cr14.8Co3Mo1.25W5Ti2.5A10.035C 0.033B0.03Zr |
| Udimet 720LI | 57Ni16Cr15Co3Mo1.25W5Ti2.5A10.025C0. 018B0.03Zr |
| MAR-M200 | 59.5Ni9Cr10Co12.5W1.8Nb2Ti5A10.05Zr0.15C0.015B |
| MAR-M200+Hf | Ni8Cr9Co12W2Hf1Nb1.9Ti5.0Al0.03Zr0.13C0.015B |
| MAR-M246 | 59.8Ni9Cr10Co2.5Mo10W1.5Ta1.5Ti5.5Al0.05Zr0.14C0.015B |
| MAR-M246+Hf | Ni9Cr10Co2.5Mo10W1.5Hf1.5Ta1.5T15.5A10.05Zr0.15C0.015B |
| Udimet 700 | 59Ni14.3Cr14.5Co4.3Mo3.5T14.3Al0.02Zr0.08C0.015B |
| Udimet 710 | 54.8Ni18Cr15Co3Mo1.5W2.5Ti5Al0.08Zr0.13C |
| Waspaloy | 5 8Ni 19Cr 13 Co4Mo3 Ti 1.4 Al |

**Table 3: Selected Specialty Steels**

| **Grade designation** | **Nominal chemical composition** |
|---|---|
| CrMoV steel | Fe1Cr0.5Ni1.25Mo0.25V0.30C |
| M152 | Fe12Cr2.5Ni1.7Mo0.3V0.12C |

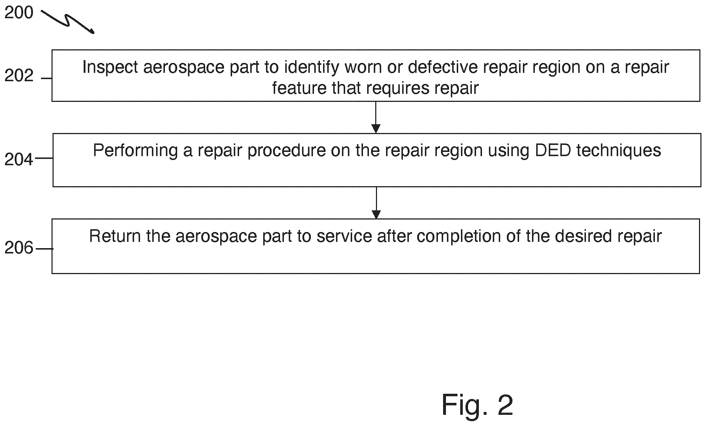

Fig. 2 is a flowchart of the overall repair procedure **200** of this disclosure. At step **202,** the aerospace part **10** is inspected to identify a worn or defective repair region **20** that requires a repair. At step **204,** a DED energy/powder head **18** deposits a plurality of layers 14 on the substrate **12** to accomplish the repair. As described above, each of the plurality of layers 14 is formed with a pre-determined microstructure to provide the repaired aerospace part with a controlled microstructure. Finally, at step **206** the aerospace part **10** is returned to service after completion of the desired repair. A person of ordinary skill will know how to perform each of these steps based upon the present disclosure and knowledge of manufacturing processes.

Using the repair technique described in this disclosure, DED techniques can be used to repair aerospace parts **10** that would not otherwise be eligible for DED repairs. Controlling DED process parameters to provide a pre-determine microstructure in each layer (or specific area within each layer) can provide desired mechanical, physical, and function properties to meet desired structural and functional requirements for the repaired aerospace part. As a result, the number of available repair methods for aerospace parts **10** is expanded.

### Discussion of Possible Embodiments

The following are non-exclusive descriptions of possible embodiments of the present invention.

A method of repairing an aerospace part, which is made from a base material, includes inspecting the aerospace part to identify a worn or defective repair region that requires repair. A repair procedure is performed on the repair region using a directed energy deposition (DED) energy/powder head. The repair procedure includes depositing, using the DED energy/powder head, a first layer of DED powder material in the repair region; melting and consolidating, using energy from the DED energy/powder head, the first layer of DED powder material to form a first repair layer having a first pre-determined microstructure; and repeating the depositing and melting and consolidating steps to create a desired plurality of repair layers. Each of the plurality of repair layers has a pre-determined microstructure. The microstructure of each of the plurality of repair layers is imparted using selected levels of DED powder material feed to the repair region, intensity of energy directed from the DED energy/powder head to the repair region, rate at which the DED energy/powder head traverses the repair region, and auxiliary heating and/or cooling provided to the repair region. The aerospace part is returned to service after completion of the desired repair.

The method of the preceding paragraph can optionally include any one or more of the following features, configurations and/or additional elements:
The method of the preceding paragraph, wherein the base material comprises a titanium alloy, a superalloy material, or a specialty steel alloy.

The method of the any of the preceding paragraphs, wherein the repair procedure includes filling cracks in the repair region.

The method of the preceding paragraph, wherein the DED powder material has the same composition as the base material.

The method of the preceding paragraph, wherein the DED powder material has a different composition as the base material.

The method of the any of the preceding paragraphs, wherein the repair procedure includes reestablishing a worn surface contour in the repair region.

The method of the preceding paragraph, wherein the DED powder material has the same composition as the base material.

The method of the preceding paragraph, wherein the DED powder material has a different composition as the base material.

The method of the any of the preceding paragraphs, wherein the aerospace part is a component of a gas turbine engine.

A repaired aerospace part has a substrate made from a base material and a plurality of repair layers formed on the substrate using directed energy deposition (DED) techniques. Each of the plurality of repair layers has a pre-determined microstructure.

The repaired aerospace part of the preceding paragraph can optionally include any one or more of the following features, configurations and/or additional elements:
The repaired aerospace part of the preceding paragraph, wherein the aerospace part is a component of a gas turbine engine.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of repairing an aerospace part (10), comprising:
inspecting the aerospace part (10) to identify a worn or defective repair region (20) that requires repair, wherein the aerospace part (10) is made from a base material;
performing, using a directed energy deposition (DED) energy/powder head (18), a repair procedure on the repair region (20), wherein the repair procedure includes:
depositing, using the DED energy/powder head (18), a first layer of DED powder material in the repair region (20);
melting and consolidating, using energy from the DED energy/powder head (18), the first layer of DED powder material to form a first repair layer (14) having a pre-determined microstructure;
repeating the depositing and melting and consolidating steps to create a
desired plurality of repair layers (14), wherein each of the plurality of repair layers (14) has a pre-determined microstructure; wherein
the pre-determined microstructure of each of the plurality of repair layers (14) is imparted using selected levels of:
DED powder material feed to the repair region (20);
intensity of energy directed from the DED energy/powder head (18) to the repair region (20);
rate at which the DED energy/powder head (18) traverses the repair region (20); and
auxiliary heating and/or cooling provided to the repair region (20);
returning the aerospace part (10) to service after completion of the desired repair.

2. The method of claim 1, wherein the base material comprises a titanium alloy, a superalloy material, or a specialty steel alloy.

3. The method of claim 1 or 2, wherein the repair procedure includes filling cracks in the repair region (20).

4. The method of any preceding claim, wherein the repair procedure includes reestablishing a worn surface contour in the repair region (20).

5. The method of any preceding claim, wherein the DED powder material has the same composition as the base material.

6. The method of any of claims 1 to 4, wherein the DED powder material has a different composition as the base material.

7. The method of any preceding claim, wherein the aerospace part (10) is a component of a gas turbine engine.

8. A repaired aerospace part (10), comprising:
a substrate (12) made from a base material; and
a plurality of repair layers (14) formed on the substrate (12) using directed energy deposition (DED) techniques, wherein each of the plurality of repair layers (14) has a pre-determined microstructure.

9. The repaired aerospace part (10) of claim 8, wherein the base material comprises a titanium alloy, a superalloy material, or a specialty steel alloy.

10. The repaired aerospace part (10) of claim 8 or 9, wherein the plurality of repair layers (14) have the same composition as the base material.

11. The repaired aerospace part (10) of claim 8 or 9, wherein the plurality of repair layers (14) have a different composition as the base material.

12. The repaired aerospace part (10) of any of claims 8 to 11, wherein the aerospace part (10) is a component of a gas turbine engine.
